Europäisches Patentamt

European Patent Office

Office européen des brevets

(11) Numéro de publication : **0 667 215 A1**

# (12) DEMANDE DE BREVET EUROPEEN

(21) Numéro de dépôt : **95400146.7**

(51) Int. Cl.$^6$ : **B25J 9/16**

(22) Date de dépôt : **24.01.95**

(30) Priorité : **28.01.94 FR 9400961**

(43) Date de publication de la demande :
**16.08.95 Bulletin 95/33**

(84) Etats contractants désignés :
**DE FR GB IT NL**

(71) Demandeur : **Thomson Broadband Systems**
**Technopôle Brest-Iroise,**
**Site de la Pointe du Diable**
**F-29608 Brest (FR)**

(72) Inventeur : **Venaille, Christophe**
**THOMSON-CSF,**
**SCPI,**
**B.P. 329**
**F-92402 Courbevoie Cedex (FR)**
Inventeur : **Burel, Gilles**
**THOMSON-CSF,**
**SCPI,**
**B.P. 329**
**F-92402 Courbevoie Cedex (FR)**
Inventeur : **Catros, Jean-Yves**
**THOMSON-CSF,**
**SCPI,**
**B.P. 329**
**F-92402 Courbevoie Cedex (FR)**

(74) Mandataire : **Guérin, Michel et al**
**THOMSON-CSF**
**SCPI**
**B.P. 329**
**50, rue Jean-Pierre Timbaud**
**F-92402 Courbevoie Cédex (FR)**

(54) **Procédé d'asservissement d'un robot dans l'espace à trois dimensions et robot évoluant dans un tel espace.**

(57)   Le procédé selon l'invention consiste dans une première étape (1) d'apprentissage, à présenter un nombre déterminé d'exemples à l'entrée d'un réseau de neurones lui permettant d'estimer l'inverse de la matrice jacobienne de la tâche d'asservissement à partir de chaque exemple correspondant à une variation de la perception de l'environnement du robot liée à un déplacement déterminé du robot dans l'espace, et dans une deuxième étape (2) d'exécution, le réseau de neurones ayant été entraîné dans l'étape (1) d'apprentissage, à asservir en boucle fermée les mouvements du robot à la perception réelle de son environnement, par l'intermédiaire du réseau de neurones, pour qu'elle coïncide avec celle de la position de référence à atteindre, le processus étant arrêté quand la perception réelle du robot coïncide avec celle de la position de référence.
Applications : contrôle industriel, assemblage, navigation, système de pointage etc..

EP 0 667 215 A1

POSITION
DE
RÉFÉRENCE ⟋8

Image de référence

TRAITEMENT
IMAGE ⟋10

f réf.

GÉNÉRATEUR
DE
POSITIONS ⟋11

$dX_{réel}$

ROBOT ⟋9

Image
courante

TRAITEMENT
IMAGE ⟋12

f

+ − df

13

RÉSEAU
DE
NEURONES ⟋14

+ − $dX_{estimé}$

15

# FIG. 4

La présente invention concerne un procédé d'asservissement d'un robot dans l'espace à trois dimensions, ou 3D, et un robot évoluant dans un tel espace.

Le domaine technique dans lequel s'inscrit l'invention est celui de la "commande référencée capteur" d'un robot dont une application possible est de pouvoir commander et asservir un robot par rapport à un objet ou une scène donnée.

La "commande référencée capteur" est une approche nouvelle et originale pour la commande de robot: classiquement le déplacement d'un robot se fait par l'envoi de commandes qui indiquent, pour le mouvement désiré, les valeurs angulaires des rotations à appliquer séparément à chaque axe du robot (ces commandes sont généralement exprimées soit dans un repère cartésien, soit en coordonnées angulaires).

Pour amener avec une bonne précision l'organe terminal d'un robot à une position déterminée, une telle approche nécessite soit la connaissance géométrique exacte du modèle du robot, soit beaucoup de dextérité pour convertir dans l'espace cartésien, des mouvements définis dans l'espace articulaire. Par ailleurs, une telle approche ne prend absolument pas en compte les variations possibles de l'environnement et est donc dépourvue de toute adaptabilité.

L'approche proposée par la "commande référencée capteur" est la suivante : au lieu de spécifier dans un espace géométrique le but à atteindre pour le robot, c'est-à-dire le mouvement à effectuer, le but à atteindre est spécifié en termes de signaux devant être observés par des capteurs montés sur le robot.

Dans le cas d'une "commande référencée image", une caméra est fixée sur le robot et observe la scène vue par le robot. L'image délivrée par la caméra varie donc selon la position du robot. La tâche d'asservissement du robot est spécifiée non pas en envoyant une commande géométrique au robot, mais en donnant une image de référence de ce qui doit être observé par la caméra lorsque le but est atteint.

Un module de "commande référencée capteur" calcule automatiquement les bons mouvements à appliquer au robot, à partir de la différence observée entre une image réellement vue par la caméra et une image souhaitée dite de référence, en simplifiant ainsi considérablement la tâche demandée à l'opérateur.

L'avantage de la "commande référencée capteur" de robot est donc non seulement d'apporter une souplesse importante à l'utilisateur dans sa tâche de programmation du robot, mais aussi d'apporter enfin aux robots l'autonomie et l'adaptabilité qui leur font si cruellement défaut. En effet, les robots actuels ne peuvent travailler que sur des séquences répétitives apprises et pour lesquelles l'environnement est figé. En cas de changements même minimes de l'environnement, par exemple une petite erreur de placement d'un composant lors d'une tâche d'assemblage, les robots actuels ne sont pas capables de s'adapter à des situations nouvelles. La "commande référencée capteur" offre cette capacité d'adaptation puisque dans ce cas le robot "voit ce qu'il fait" et est donc capable de s'asservir automatiquement par rapport à un objet pour lequel a été défini une image de référence.

Le problème général à résoudre est le calcul du déplacement d'un robot doté d'un capteur lorsqu'on connaît à tout instant le signal désiré, ou signal de référence, en position finale, ou position à atteindre, et le signal délivré par le capteur quand le robot est dans une position courante au voisinage de la position à atteindre.

Plusieurs approches ont déjà été proposées dans la littérature pour traiter le problème de la "commande référencée image" notamment :

- un article de F. Chaumette, P.Rives, B. Espiau intitulé "Positioning a robot with respect to an object tracking it and estimating its velocity by visual servoing", Proceedings of the 1991 IEEE International Conference on Robotics and Automation, pp.2248-2253, Sacramento, California, April 1991,
- un article de L.E. Weiss, C. Sanderson, C.P. Neuman intitulé : "Dynamic sensor-based control of robots with visual feedback", IEEE Journal of Robotics and Automation, Vol. RA-3, n° 5, pp.404-417, October 1987,
- un article de J.T. Feddema, O.R. Mitchell intitulé "Vision-guided servoing with feature-based trajectory generation", IEEE Transactions on Robotics and Automation, Vol.5, n° 5, pp.691700, October 1989,
- un article de P. Rives, F. Chaumette, B. Espiau intitulé : "Visual servoing based on a task function approach", First International Symposium on Experimental Robotics, Montréal, Canada, June 1989, et
- un article de C. Samson, M. Le Borgne, B.Espiau intitulé : "Robot Control : The Task Function Approach", Oxford Science Publications, Oxford 1991.

Toutes ces approches suivent plus ou moins le même principe décrit ci-dessous.

Tout d'abord, un certain nombre de paramètres sont déterminés hors asservissement, par les étapes énumérées ci-dessous telles que :

- la définition de l'image de référence, consistant à choisir préalablement une image de référence de l'objet ou de la scène vue par le robot qui constituera la cible à atteindre par le robot,
- la sélection des caractéristiques "image" consistant, dans l'image de référence à isoler un nombre fini de caractéristiques (point, lignes remarquables, etc...),
- la modélisation 2D/3D consistant à identifier pour chacune de ces caractéristiques les coordonnées 2D dans l'image et les informations 3D associées dans la scène sur l'objet ou dans la scène observée par la caméra du robot,

- la calibration "robot/caméra" pour la détermination du modèle géométrique exact du robot et la position relative exacte de la caméra par rapport au repère géométrique associé au robot, et
- le calcul de la matrice jacobienne de la tâche d'asservissement obtenu à partir de relations géométriques entre les points caractéristiques 3D de la scène, le robot et le capteur.

Le calcul théorique du déplacement df dans l'image des coordonnées des points caractéristiques sélectionnés en fonction du déplacement du robot dX peut être alors effectué à partir de la matrice jacobienne de la tâche d'asservissement par la formule suivante :

$$df = J_{tâche}.dX \quad (1)$$

En fait, c'est donc la détermination de l'inverse de cette matrice $J_{tâche}$ qui est intéressante, de façon à retrouver la commande à appliquer au robot lorsque la déviation image df est connue.

Une fois ces données acquises, le processus d'asservissement visuel, ou "commande référencée capteur" se déroule suivant un processus itératif.

Le robot reçoit un ordre de déplacement en fonction des déviations images. Une nouvelle image est alors acquise et à nouveau comparée à l'image de référence. Le robot est ainsi déplacé jusqu'à convergence vers la position désirée. A chaque itération, les opérations suivantes doivent être réalisées :

- une acquisition et un traitement de l'image courante,
- une extraction des caractéristiques "images" et un appariement consistant, dans l'image acquise, à détecter les points caractéristiques et à les mettre en correspondance avec les points sélectionnés dans l'image de référence, et
- un calcul du mouvement inverse qui à partir des différences entre les deux images, détermine la commande à appliquer au robot par inversion de la matrice jacobiennne de la tâche d'asservissement.

Les inconvénients liés à ce type d'approche limitent la portée du concept de "commande référencée capteur" par le manque de fiabilité de la méthode, notamment du fait d'une grande sensibilité des phases de traitement de l'image et de l'appariement, par la lourdeur de mise en oeuvre (nécessité de modélisation de l'ensemble scène, robot et caméra), et par le faible champ applicatif possible (nécessité de voir des éléments "facilement reconnaissables" par un algorithme dans l'image observée).

Ces inconvénients sont énumérés ci-dessous :

Les étapes de modélisation 2D/3D et de calibration "robot/caméra" exigent une bonne connaissance des positions géométriques relatives des différents constituants que sont le robot, la caméra, et les caractéristiques 3D sur lesquelles l'asservissement est réalisé. Cela ne peut être obtenu que par des moyens demandant un effort important de modélisations et de calibrations qui sont des tâches réputées fastidieuses et imprécises.

De plus, l'étape du calcul théorique du jacobien de la tâche limite le type de données caractéristiques pouvant être utilisées à des primitives géométriques simples telles que des points, segments de droites, cercles, ellipses etc..., et qui sont définies localement. En aucun cas elles ne peuvent être étendues à des descripteurs globaux de l'image dont la détermination est pourtant plus robuste.

Les étapes d'acquisition et traitement de l'image courante, d'extraction des caractéristiques "images" et d'appariement sont les plus délicates et sont très sensibles au bruit : le principe de la méthode impose en effet la possibilité, et cela quelles que soient les conditions d'éclairage, la position du robot par rapport à l'objet, etc..., d'extraire dans l'image vue par le robot les éléments caractéristiques recherchées, et de les apparier à ceux de l'image de référence. Toute erreur à ce niveau entraîne généralement un échec de la méthode.

En conclusion, la recherche d'une relation mathématique entre les mouvements du robot et les déviations observées dans l'image, par rapport à un signal de référence, est un problème non-linéaire difficile qui exige un important effort de modélisation et qui est généralement très sensible aux algorithmes de traitement d'images utilisés pour l'extraction de primitives.

Le but de l'invention est de pallier les inconvénients précités.

A cet effet l'invention a pour objet un procédé d'asservissement d'un robot évoluant dans l'espace à trois dimensions, consistant à rapprocher le robot d'une position de référence à atteindre en comparant, lors de son évolution dans l'espace, la position courante du robot par rapport à son environnement perçu par au moins un capteur couplé au robot, à la position de référence située dans l'environnement perçu par le capteur couplé au robot, caractérisé en ce qu'il consiste, dans une première étape d'apprentissage, à présenter un nombre déterminé d'exemples à l'entrée d'un réseau de neurones lui permettant d'estimer la loi de transformation entre les signaux perçus par le capteur et les mouvements à effectuer par le robot dans son espace ou dans l'espace cartésien, chaque exemple correspondant à une variation de la perception de l'environnement du robot liée à un déplacement déterminé du robot dans l'espace, et dans une deuxième étape d'exécution, le réseau de neurones ayant été entraîné dans l'étape d'apprentissage, à asservir en boucle fermée les mouvements du robot à la perception réelle de son environnement par l'intermédiaire du réseau de neurones pour qu'elle coïncide avec celle de la position de référence à atteindre, le processus étant arrêté quand la perception réelle du robot coïncide avec celle de la position de référence et en ce que pour un capteur d'images traduisant la scène perçue par le robot, comprenant la position de référence, en une séquence d'images, il consiste pour le traitement des images courantes et de référence acquises par le capteur, à calculer respectivement un nombre déterminé de descripteurs globaux d'image.

L'invention a également pour objet un robot évoluant dans l'espace à trois dimensions par asservissement de la perception de son environnement à une perception d'une position de référence déterminée, comportant au moins un capteur couplé à des moyens de traitement des informations reçues par le capteur convertissant une variation de la perception du robot en une commande déterminée, et des moyens mécaniques permettant de déplacer le robot en fonction de cette commande, caractérisé en ce qu'il comporte en outre au moins un réseau de neurones recevant en entrée un nombre déterminé d'exemples issus des moyens de traitements des informations et estimant la loi de transformation entre les signaux perçus par le capteur et les mouvements à effectuer par le robot, chaque exemple correspondant à la variation de la perception du robot liée à un déplacement déterminée du robot dans l'espace lors de l'apprentissage du réseau, et comporte en outre dans une boucle fermée des moyens de calculs recevant sur leur entrée une estimation de la position relative du robot par rapport à la position de référence à atteindre, l'estimation étant calculée par le réseau de neurones, et délivrant en sortie un signal de commande permettant au robot de corriger sa position courante pour la rapprocher de la position de référence à atteindre, en ce qu'il comporte au moins un capteur d'image lui permettant de visualiser son environnement sous la forme d'une séquence d'images, et en ce qu'il comporte des moyens de traitement d'image calculant des descripteurs globaux d'image.

Un des principaux avantages de l'invention est d'éviter la modélisation explicite de la loi de transformation entre les signaux perçus par le robot et les mouvements à effectuer par le robot, transformation qui est compliquée à estimer et qui nécessite de nombreuses calibrations.

Un autre avantage de l'invention est de permettre en utilisant plusieurs capteurs, non seulement une bonne similitude à la convergence entre l'image vue par la caméra et l'image désirée dite de référence, c'est-à-dire une erreur de signal la plus faible possible, mais aussi d'assurer une meilleure précision 3D sur la position finale de la caméra par rapport au repère géométrique associé au robot.

D'autres avantages et caractéristiques de l'invention apparaîtront plus clairement à l'aide de la description qui suit et des figures annexées qui représentent :
- la figure 1, les principales étapes du procédé selon l'invention,
- les figures 2 et 3, deux schémas illustrant respectivement la mise en oeuvre du procédé selon l'invention, avant et après asservissement du robot,
- la figure 4, un bloc diagramme de l'étape d'apprentissage du procédé selon l'invention,
- la figure 5, un bloc diagramme de l'étape d'exécution du procédé selon l'invention,
- les figures 6 et 7, deux blocs diagrammes, similaires respectivement à la figure 4 et la figure 5, utilisant des descripteurs de Fourier, et
- la figure 8, un bloc diagramme illustrant le procédé selon l'invention dans le cas de plusieurs capteurs.

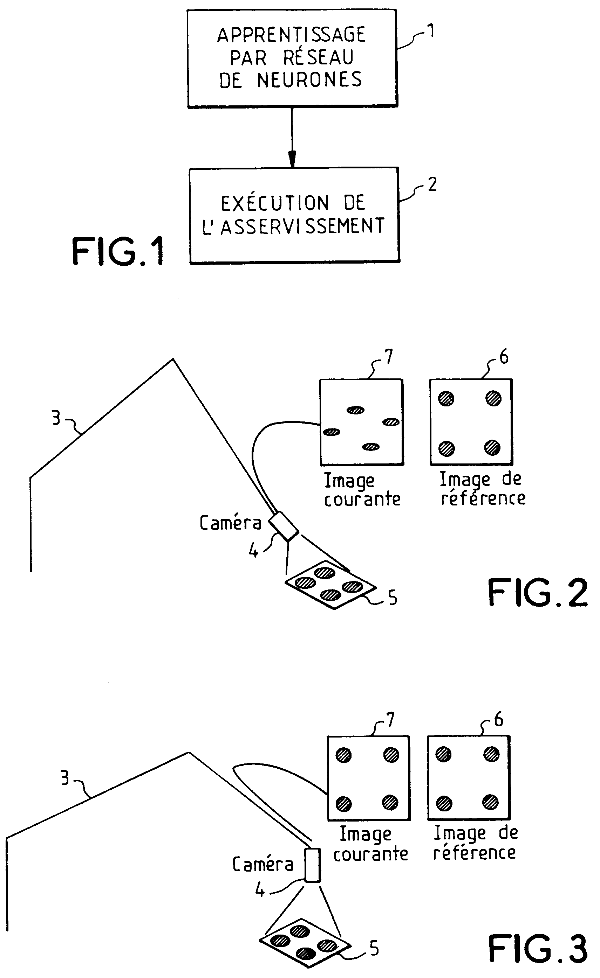

La première étape 1 du procédé selon l'invention qui est représentée à la figure 1 consiste à utiliser des techniques d'apprentissage pour déterminer les relations existant entre les variations observées dans l'image et la commande à fournir au robot pour atteindre une position de référence. Cet apprentissage est réalisé par un réseau de neurones auquel est présenté un nombre important d'exemples pour lesquels le déplacement du robot et la variation "image" sont connus quasi simultanément.

Le réseau une fois "entraîné" dans l'étape 1 d'apprentissage est utilisé dans l'étape 2 d'exécution pour l'asservissement en boucle fermé du déplacement du robot.

Un avantage de cette technique est qu'elle ne nécessite aucune calibration de la caméra, aucune calibration approximative du robot (celle du constructeur par exemple est suffisante), aucune donnée géométrique ni modèle 3D de l'objet vu par la caméra, ni aucune relation 3D entre les positions relatives de l'objet par rapport à la caméra et de la caméra par rapport au robot. Tous ces paramètres sont "appris" par le réseau de neurones dans l'étape 1 d'apprentissage du procédé selon l'invention.

Les figures 2 et 3 illustrent schématiquement la mise en oeuvre du procédé selon l'invention, respectivement, avant et après asservissement d'un robot 3.

Sur ces figures, le robot 3 est représenté sous la forme schématisée d'un robot pantin filaire. Une caméra 4 est fixée sur l'extrémité du dernier axe du robot 3. La scène 5 observée par la caméra 4 est constituée par exemple d'un objet plan carré sur lequel quatre tâches ont été marquées pour symboliser des éléments caractéristiques de l'image visualisée par la caméra 4.

La figure 2 montre la position initiale du robot 3 au voisinage de la position désirée qui est définie par une image de référence 6 préalablement acquise et qui constitue la consigne fournie au robot 1, et une image courante 7 de la scène 5 visualisée par la caméra 4.

5

La figure 3 représente le robot 3 en position finale après asservissement, lorsque l'image courante 7 coïncide avec l'image de référence 6.

Par souci de clarté, l'invention est décrite pour un capteur de type caméra CCD, mais pourrait tout aussi bien être utilisé dans le cas d'autres capteurs tels que des capteurs de proximité, télémètres, ultrasons, etc...

Le problème dans le cas d'un signal "image" est donc de convertir les différences "images" observées entre l'image de référence et l'image courante dans l'espace 2D, en un mouvement à appliquer à un robot ayant six degrés de liberté : trois en rotation et trois en translation.

Le robot 3 peut être commandé soit en coordonnées angulaires par six paramètres qui codent respectivement le mouvement de chaque axe, soit en coordonnées cartésiennes dans le repère cartésien associé au dernier axe du robot 3 correspondant par exemple au repère du poignet: trois paramètres de rotation $R_x$, $R_y$, $R_z$ s'exprimant en degrés et trois paramètres en translation $T_x$, $T_y$, $T_z$ s'exprimant en millimètres.

C'est ce deuxième type de commande qui est conservé par la suite.

L'objectif à atteindre est défini par une image de référence 6 préalablement acquise par un opérateur qui a ainsi fixé la position relative que devait avoir le robot 3 par rapport à l'environnement vu par la caméra 4. Des algorithmes de traitement d'image connus permettent d'extraire de chaque image courante 6 un vecteur de longueur fixe f caractérisant la position ou la forme d'un nombre déterminé d'éléments caractéristiques de l'image courante 7. Par exemple, cela peut être un vecteur f à huit dimensions constitué des coordonnées-image $(u_i, v_i)$ de quatre points de la scène 5 vus par la caméra 4 : $f = (u_1, v_1, u_2, v_2, u_3, v_3, u_4, v_4)$.

Un vecteur fréf caractérise l'image de référence 6. Dans cette partie il est supposé que les éléments caractéristiques sont toujours observables par la caméra 4 et ce, quelle que soit la position du robot 3 et que la mise en correspondance des éléments entre l'image courante 7 et l'image de référence 6 est possible. Il est supposé donc que la $i^{ème}$ composante du vecteur f caractérise le même élément caractéristique que la $i^{éme}$ composante du vecteur $f_{réf.}$. Le vecteur-différence, terme à terme, $df = f - f_{réf.}$ représente donc le signal d'erreur entre la position réelle du robot 3 et sa position désirée.

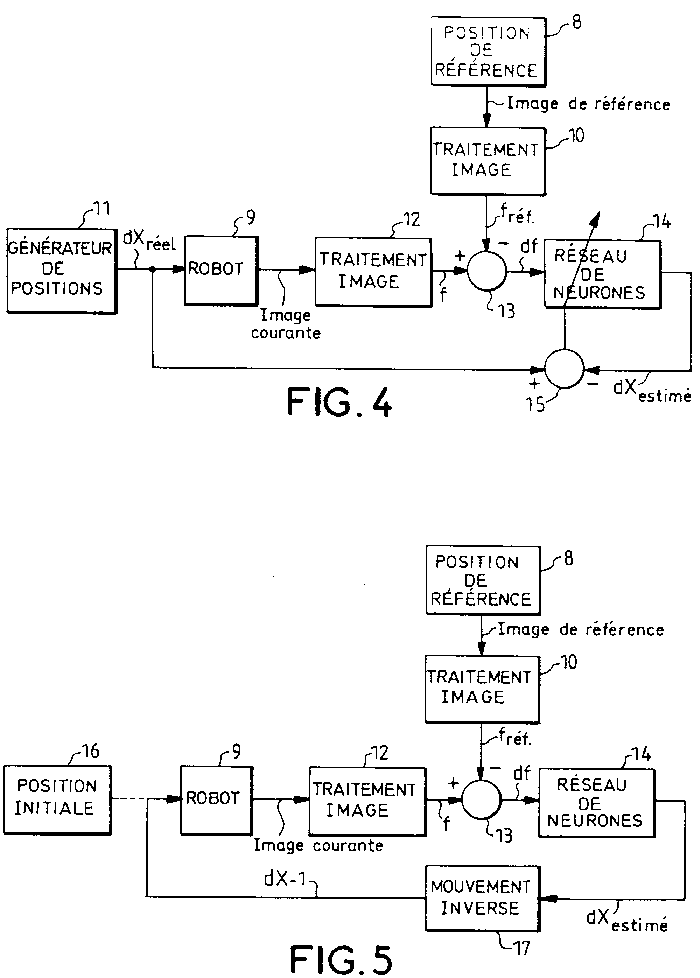

Un bloc diagramme correspondant à l'étape 1 d'apprentissage du procédé selon l'invention est illustré par la figure 4.

L'opérateur définit dans un premier temps une image de référence correspondant à une position de référence déterminée à atteindre par le robot. L'image de référence est symbolisée sur la figure 4 par le bloc 8 et le robot par le bloc 9.

Le traitement de l'image de référence est symbolisé par le bloc 10 et un vecteur de référence $f_{réf.}$ est calculé à partir de l'image de référence ainsi obtenu en sortie du bloc 10. Le robot 9 est ensuite déplacé un nombre déterminé de fois de la position de référence 8, d'une valeur déterminée en rotation et en translation. Un vecteur $dX_{réel}$ correspondant à ce déplacement est donc connu et représente la position relative du robot 9 par rapport à la position de référence 8 exprimée dans un repère cartésien. Le vecteur dXréel est délivré par un bloc 11 symbolisant un générateur de positions autour de la position de référence 8.

Pour chacun de ces déplacements $dX_{réel}$, une image courante est acquise par le robot 9 dont le traitement est symbolisé par le bloc 12. Ce traitement permet de générer un vecteur f calculé à partir de l'image courante.

Les deux vecteurs f et $f_{réf.}$ issus respectivement des blocs 12 et 10 sont ensuite injectés respectivement sur une première entrée d'opérande positive et sur une deuxième entrée d'opérande négative d'un comparateur 13 qui délivre en sortie un vecteur df de dimension constante déterminée.

Pour chacun de ces déplacements $dX_{réel}$, un vecteur "déviation image" df correspondant est donc calculé. Un ensemble d'exemples i constitués de couples $(df_i, dX_i)$ est alors obtenu. Le but de l'étape 1 d'apprentissage est alors de présenter ces exemples plusieurs fois à un réseau de neurones représenté par le bloc 14 dont les poids ont été initialisés aléatoirement, et de comparer un vecteur estimé, $dX^i_{estimé}$ par le réseau de neurones 14 à la valeur exacte attendue, $dX_i$, issue du bloc 11. Pour cela, les vecteurs $dX_i$ et $dX_{i\ estimé}$ sont respectivement injectés sur une première entrée d'opérande positive et sur une deuxième entrée d'opérande négative d'un comparateur 15. Le signal d'erreur, $dX_i - dX_i$ estimé issu de la sortie du comparateur 15 permet la mise à jour des poids du réseau 14 pour minimiser la valeur du signal d'erreur. Le réseau de neurones 14 est de type "Perceptron Multicouche".

Un algorithme de rétropropagation classique est utilisé pour cette phase et est notamment décrit dans l'article de Rumelhart D.E., Hinton G.E., Williams R.J. intitulé : "Learning internal representations by error backpropagation, in D.E. Rumelhart & J.L. McClelland (Eds.), Parallel distributed processing", vol.I, pp.318-362, The MIT Press, Cambridge 1986.

A la fin de l'étape 1 d'apprentissage, la différence entre les valeurs estimées et les valeurs réelles a atteint une valeur minimale déterminée pour les exemples appris. Si le nombre d'exemples appris est suffisamment important et représentatif des différentes configurations, le réseau de neurones 14 possède alors une bonne capacité de généralisation lors de l'étape 2 d'exécution.

Dans la pratique, il est constaté que 500 exemples i choisis aléatoirement autour de la position de référence 8 sont suffisants pour un apprentissage correct du réseau de neurones 14.

Un bloc diagramme de l'étape 2 d'exécution est illustrée par la figure 5. Cette figure étant très proche de la figure 4 les éléments homologues à cette figure sont désignés par les mêmes repères.

Dans cette étape le réseau de neurones 14 est supposé "entraîné" et l'opérateur a défini une image de référence à atteindre. A cause de différentes perturbations, le robot 9 dans sa position initiale symbolisée par le bloc 16 peut ne pas voir exactement l'image de référence. Le traitement de l'image courante par le bloc 12 permet de calculer le vecteur f. Le vecteur df de dimension constante est déduit de la comparaison avec le vecteur référence $f_{réf}$. Ce vecteur est injecté à l'entrée du réseau de neurones 14 qui a préalablement estimé dans l'étape 1 d'apprentissage l'inverse de la matrice jacobienne de la tâche: chaque composante du vecteur df est l'un des neurones de la couche d'entrée du réseau 14. La sortie du réseau 14 délivre le vecteur dX qui est une estimation de la position relative du robot 9 par rapport à la position de référence 8. Dans l'exemple traité, c'est donc un vecteur à six composantes, trois composantes en rotation et en translation suivant les trois axes x, y, z du repère cartésien considéré, de la forme $dX=(R_x, R_y, R_z, T_x, T_y, T_z)$ qui est utilisé. La couche de sortie du réseau de neurones 14 est donc composée de six neurones à valeurs réelles. Pour déterminer la commande à donner au robot 9 pour se rapprocher de la position de référence 8, il suffit de déterminer une commande $dX^{-1}$ correspondant à une correction du mouvement du robot 9 en rotation et/ou en translation. Cette correction, appelée mouvement inverse, est symbolisée par le bloc 17. Après ce mouvement inverse le robot 9 acquiert une nouvelle image et si le vecteur différence df est inférieur à un seuil déterminé, l'asservissement du robot 9 est arrêtée sinon le processus est réitéré.

En pratique, il est connu que le fonctionnement d'un réseau de neurones est meilleur si les composantes des vecteurs de ses entrées et de ses sorties ont des valeurs comprises entre -1 et +1. Le traitement des images dans les blocs 10 et 12 est donc adapté de façon à ce que df satisfasse à cette condition. De même, il est possible de prédire les valeurs maximales de rotation et de translation et de diviser les composantes des vecteurs dX par des valeurs constantes prédéterminées.

Le réseau de neurones 14 utilisé dans le procédé selon l'invention est un perceptron multicouche. Les neurones sont organisé en trois couches successives:

- une couche d'entrée d'un nombre déterminé de neurones correspondant à la dimension du vecteur df,
- une couche intermédiaire cachée comportant quelques dizaines de neurones environ, et
- une couche de sortie constituée de six neurones correspondant aux six degrés de liberté du robot dans l'espace cartésien.

Chaque neurone de chaque couche reçoit des entrées de tous les neurones de la couche précédente ; il n'y a pas de connexions à l'intérieur d'une même couche.

Les neurones de la couche d'entrée propagent leur valeur d'entrée sans traitement. Les neurones des deux couches suivantes sont des sommateurs pondérés suivis d'une fonction non-linéaire, par exemple une fonction tangente hyperbolique, pour les neurones de la couche intermédiaire et d'une fonction linéaire pour les neurones de la couche de sortie.

Les entrées, sorties, ainsi que les poids du réseau sont des réels.

L'utilisation d'un réseau de neurones pour l'apprentissage de la matrice jacobienne de la tâche d'asservissement ouvre des perspectives nouvelles pour l'asservissement visuel en ce qui concerne le traitement d'image.

Dans l'hypothèse de départ, il était supposé que, comme dans les approches classique, l'extraction des primitives symboliques (points, segments de droites, etc...) à partir des images courante et de référence, était connue ainsi que l'appariement des primitives.

Le procédé selon l'invention permet également de déterminer par apprentissage la matrice jacobienne de la tâche d'asservissement en exploitant des descripteurs globaux d'image tels que descripteur de Fourier, moments géométriques, etc....

Le recours aux descripteurs globaux de l'image a un avantage double :

- l'extraction de paramètres globaux est plus robuste ;
- l'utilisation d'un vecteur global de taille fixe décrivant l'image évite la phase délicate de l'appariement symbolique entre primitives: une simple différence (composante à composante) entre le vecteur de l'image courante et celui de l'image de référence est suffisant.

Pour cela, il faut pouvoir caractériser chacune des positions du robot 9 donc chacune des images associées, par un vecteur global décrivant l'image associée. Ce vecteur doit donc caractériser le contenu de l'image et être dépendant de la position et de la déformation des informations géométriques, voire de luminance, contenus dans l'image. Par contre, ce vecteur doit être invariant à l'ordre dans lequel sont choisis les éléments nécessaires au calcul de ce vecteur.

Le principe détaillé d'un procédé selon l'invention utilisant des descripteurs de Fourier pour le traitement d'image est décrit ci-après.

Ce principe s'intéresse au problème de la "commande référencée capteur" dans le cas où l'image de référence représente une forme fermée, dont le contour extérieur peut être facilement détecté. A partir d'un contour fermé représenté sous la forme d'une liste de coordonnées de pixels, un contour constitué d'un nombre déterminé N de points équidistants est construit en rééchantillonnant le contour original.

Soient $U_m$, les points du contour original rééchantillonné, qui peuvent être vus comme des vecteurs dans le plan complexe, les descripteurs de Fourier $D_n$ sont définis par la formule suivante:

$$D_n = \frac{1}{N} \sum_{m=0}^{N-1} U_m \, e^{-j2\pi\frac{nm}{N}} \qquad (2)$$

Il y a donc un nombre déterminé N de descripteurs de Fourier, et les indices peuvent être vus modulo N.

Les descripteurs $D_n$ ainsi définis ne sont pas invariants aux transformations géométriques de base (translation, rotation, homothétie) et au décalage du point de départ sur le contour fermé. Il est intéressant pour le problème de "commande référencée capteur" dans le cas où l'image de référence représente une forme fermée de conserver cette dépendance à la translation, à la rotation et aux homothéties de manière à caractériser chaque image de déplacement et par contre d'obtenir l'invariance par rapport au point de départ.

En effet, pour une même forme fermée, en changeant la séquence des points de contours $U_m$ en $U'_m$ par une permutation de k, soit:

$$U'_m = U_{(m + k)} \bmod N \qquad (3)$$

de nouveaux descripteurs de Fourier $D'_n$ sont alors obtenus par la formule suivante

$$D'_n = D_n e^{2jk\frac{kn}{N}} \qquad (4)$$

En conséquence, pour être invariant par rapport à cette transformation il faut réaliser une normalisation en multipliant tous les coefficients $D'_n$ par $e^{-jn\phi 1}$

où $\phi'_1$ est la phase du coefficient $D'_1$ déterminé par la formule suivante:

$$D'_1 = \rho_1.e^{j\phi'_1} \qquad (5)$$

où $\rho_1$ est le module du coefficient $D'_1$.

En effet, soit:

$$C'_n = D'_n.e^{-jn\phi'_1} = D_n.e^{2j\pi\frac{kn}{N} - jn\phi'_1} \qquad (6)$$

Or :

$$\phi'_n = \phi_n + 2\pi k \frac{n}{N} \qquad (7)$$

Donc, en particulier:

$$\phi'_1 = \phi_1 + 2\frac{\pi k}{N} \qquad (8)$$

Donc:

$$C'_n = D_n.e^{j\left(\frac{2\pi kn}{N} - \frac{2\pi kn}{N} - n\phi_1\right)} = D_n.e^{-jn\phi 1} = C_n \qquad (9)$$

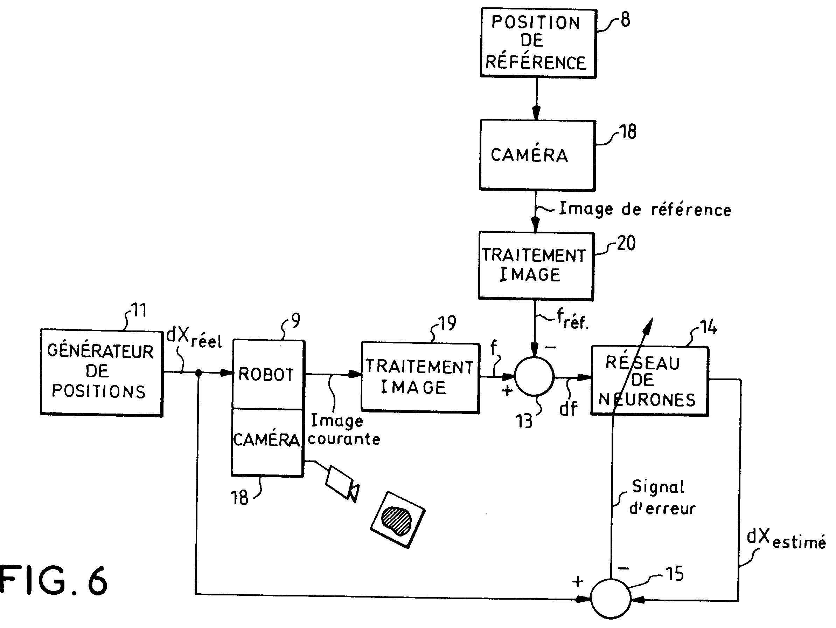

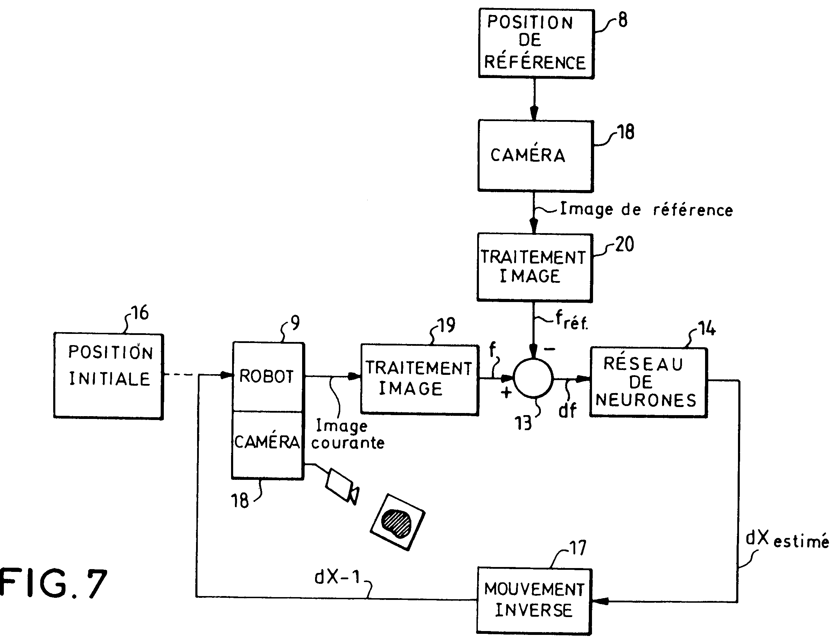

Deux nouveaux blocs diagrammes du procédé de "commande référencée capteur d'image" selon l'invention utilisant des descripteurs de Fourier sont illustrés pour la phase d'apprentissage et la phase d'exécution respectivement par les figures 6 et 7. Ces figures s'inspirent des blocs diagrammes des figures 4 et 5 et les éléments homologues sont désignés par le même repère.

Dans l'étape 1 d'apprentissage illustrée par la figure 6, pour chaque image courante acquise par une caméra 18, couplée au robot 9, le contour d'un objet contenu dans l'image est analysé par un bloc de traitement d'image 19. Le bloc 19 calcule un nombre déterminé N de descripteurs, par exemple N=500, et ne conserve que les M+1 premiers coefficients, par exemple $C_0, C_1,...,C_M$ avec M=16 par exemple, et les derniers coefficients, par exemple $C_{N-M},...,C_{N-1}$, qui peuvent encore s'écrire $C_{-M},...,C_{-1}$ puisque les coefficients sont définis modulo N. Les coefficients conservés correspondent en effet aux basses fréquences, et codent donc la forme générale du contour, alors que les autres coefficients correspondent à des hautes fréquences, qui codent surtout du bruit de quantification.

L'image de la position de référence symbolisée par le bloc 8 et acquise par la caméra 18 est analysée par un bloc de traitement d'image 20.

En pratique, les deux blocs 19 et 20 ainsi que les blocs 11 et 14 sont compris dans un même calculateur, non représenté, pour le traitement des séquences d'images prises par la caméra 18 fixée sur le robot et qui est couplée à des moyens mécaniques non représentés pour permettre le déplacement du robot 9.

Soit $f_{réf.}$ le vecteur obtenu à partir de l'image de référence en sortie du bloc 20, le vecteur $f_{réf.}$ étant composé de 33 descripteurs de Fourier, soit 2M+1 valeurs complexes ou 4M+2 valeurs réelles, et soit f le vecteur obtenu à partir de l'image courante en sortie du bloc 19, l'appariement entre l'image de référence et l'image courante est donc très simple à réaliser et consiste en une différence terme à terme entre les deux vecteurs donnée par la forme suivante :

$$df = f - f_{réf.} = (dC_{-M},...,dC_{-1},dC_0,dC_1,...,dC_M) \quad (10)$$

le vecteur df est ensuite injecté en entrée du réseau de neurones 14.

Le réseau de neurones 14 délivre en sortie un vecteur estimé $dX_{estimé}$ relatif à chaque mouvement estimé du robot 9 et ce vecteur est comparé au vecteur $dX_{réel}$ représentatif de chaque mouvement réel du robot 9. Ces deux vecteurs $dX_{estimé}$ et $dX_{réel}$ sont injectés respectivement sur une première entrée d'opérande négative et sur une deuxième entrée d'opérande positive du comparateur 15. Le signal d'erreur résultant de cette comparaison est injecté sur le réseau de neurones 14 permettant ainsi un positionnement précis du robot 9

La méthode d'asservissement visuel par réseau de neurones peut ainsi s'appliquer à tout autre algorithme de traitement d'images capable de fournir un descripteur global d'une image. Les moments géométriques de l'image de gris ou d'une image de contour peuvent être également utilisés.

L'étape d'exécution illustrée par la figure 7 est dans son principe identique à l'étape 2 du procédé selon l'invention illustrée par la figure 5 et adaptée aux descripteurs de Fourier. Elle n'est donc pas décrite.

Le procédé selon l'invention peut être aisément étendue à un nombre n déterminé de capteurs permettant d'augmenter la précision du positionnement 3D du robot relativement à l'objet ou à la partie de scène sur laquelle l'asservissement veut être effectué.

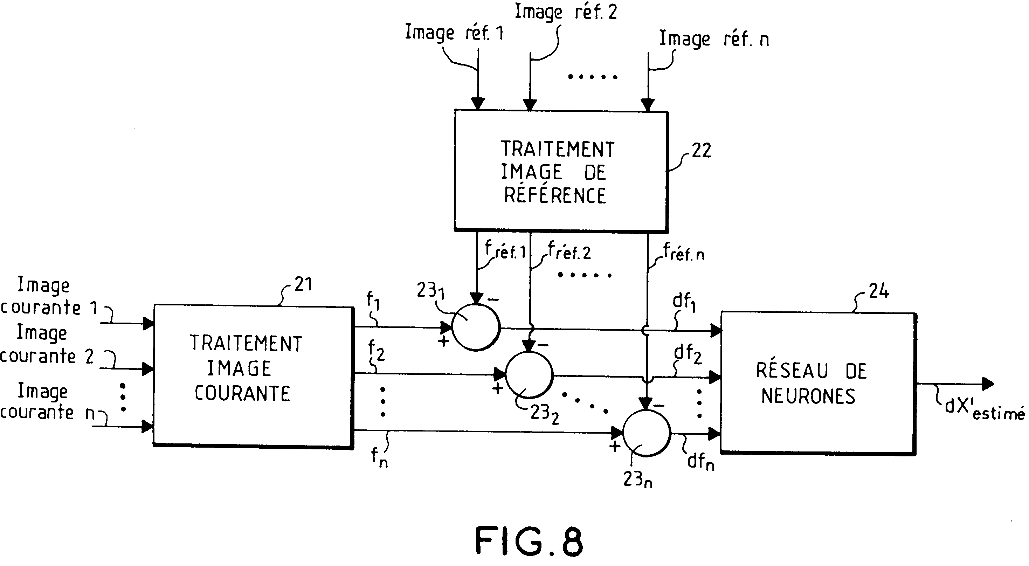

Le bloc diagramme de la figure 8 illustre le procédé selon l'invention dans le cas de n capteurs images.

Un nombre n-1 de caméras, non représentées, sont couplées au robot 9, mais légèrement décalées les unes des autres en translation et/ou en rotation. La position des caméras doit être déterminée, de façon à ce que lorsque l'opérateur définit l'image de référence à atteindre, elles caméra "pointent" toutes dans la même zone d'intérêt. Comme les caméras ne sont pas exactement placées au même endroit les images de références respectives à chaque caméra sont différentes et délivrent des images courantes légèrement différentes et cela quelle que soit la position du robot .

Les n caméras délivrent respectivement une image courante 1 à n à l'entrée d'un bloc de traitement d'image courante 21. De même, elles délivrent respectivement une image de référence réf.1 à réf.n à l'entrée d'un bloc de traitement d'image de référence 22.

Les traitements des images courante et de référence acquises par les n caméras sont identiques à ceux décrits précédemment et correspondent respectivement aux blocs 10 et 12 des figures 4 et 5 et des blocs 13 et 20 des figures 6 et 7.

Les sorties de chaque bloc de traitement 21 et 22 délivrent respectivement des vecteurs $f_1$ à $f_n$ caractéristiques des images courantes 1 à n, et des vecteurs $f_{réf.1}$ à $f_{réf.n}$ caractéristiques des images de référence $réf._1$ à $réf._n$. Les vecteurs $f_1$ à $f_n$ et $f_{réf.1}$ à $f_{réf.n}$ sont de même dimension et sont injectés respectivement sur une première entrée d'opérande positive et sur une deuxième entrée d'opérande négative de comparateurs $23_1$ à $23_n$.

Des vecteurs d'erreur, $df_1$ à $df_n$, correspondant respectivement à la différence entre l'image courante et l'image de référence pour chaque capteur 1 à n, sont injectés à l'entrée d'un réseau de neurones 24 de même nature que le précédent réseau de neurones 14 pour l'étape d'apprentissage 1 et d'exécution 2. Seule la dimension de l'entrée du réseau 24 doit être adaptée en fonction du nombre de capteurs utilisés. Cela revient donc à adapter le nombre de neurones de la couche d'entrée du réseau 24 en fonction de la dimension du vecteur f, représentatif des éléments caractéristiques d'une image, multipliée par le nombre de capteurs.

La sortie du réseau de neurones 24, dont la couche de sortie comporte un nombre de neurones invariant quel que soit le nombre de capteurs utilisés, délivre un vecteur du déplacement estimé $dX'_{estimé}$.

Le robot dispose ainsi d'un système de vision stéréoscopique ne nécessitant pas de calcul explicite de données 3D. Plus le nombre de capteurs est important meilleure sera la triangulation et le positionnement final.

Ce principe s'étend également à des capteurs, de natures différentes.


**Revendications**

1. Procédé d'asservissement d'un robot (3; 9) évoluant dans l'espace à trois dimensions, consistant à rapprocher le robot (3; 9) d'une position de référence (8) à atteindre en comparant, lors de son évolution dans l'espace, la position courante du robot (3; 9) par rapport à son environnement perçu par au moins un capteur (4; 18) couplé au robot (3; 9), à la position de référence (8) située dans l'environnement perçu par le capteur (4; 18) couplé au robot (3; 9), caractérisé en ce qu'il consiste, dans une première étape (1) d'apprentissage, à présenter un nombre déterminé d'exemples à l'entrée d'un réseau de neurones (14) lui permettant d'estimer la loi de transformation entre les signaux perçus par le capteur (4; 18) et les mouvements à effectuer par le robot (3; 9) dans son espace articulaire ou dans l'espace cartésien, chaque exemple correspondant à une variation de la perception de l'environnement du robot (3; 9) liée à un déplacement déterminé du robot (3; 9) dans l'espace, et dans une deuxième étape (2) d'exécution, le réseau de neurones (14) ayant été entraîné dans l'étape (1) d'apprentissage, à asservir en boucle fermée les mouvements du robot (3; 9) à la perception réelle de son environnement par l'intermédiaire du réseau de neurones (14) pour qu'elle coïncide avec celle de la position de référence (8) à atteindre, le processus étant arrêté quand la perception réelle du robot (3; 9) coïncide avec celle de la position de référence (8) et en ce que pour un capteur d'images (4 ; 18) traduisant la scène perçue par le robot (3; 9), comprenant la position de référence (8), en une séquence d'images, il consiste pour le traitement (19, 20) des images courante et de référence acquises par le capteur (4; 18), à calculer respectivement un nombre déterminé de descripteurs globaux d'image.

2. Procédé selon la revendication 1, caractérisé en ce que les descripteurs globaux d'image sont des descripteurs de Fourier permettant l'analyse d'une image représentant une forme fermée dont le contour extérieur est détectable.

3. Procédé selon la revendication 1, caractérisé en ce que les descripteurs globaux d'image sont des moments géométriques.

4. Procédé selon l'une quelconque des revendications précédentes, caractérisé en ce qu'il consiste pour augmenter la précision du positionnement du robot (3; 9) par rapport à une position de référence déterminée (8) à atteindre, à comparer une première série de signaux ($f_1$ et $f_2$), correspondant respectivement au résultat d'un traitement (21) de l'image courante acquise par un premier capteur d'image et de l'image courante acquise par au moins un deuxième capteur d'image couplé au robot (3; 9) et décalé du premier capteur tout en pointant dans la même zone d'intérêt que le premier capteur, à une deuxième série de signaux ($f_{réf.1}$ et $f_{réf.2}$) correspondant respectivement au résultat d'un traitement (22) de l'image de référence acquise par le premier capteur d'image et de l'image de référence acquise par le deuxième capteur d'image, les résultats ($df_1$ et $df_2$) de ces comparaisons ($23_1$ et $23_2$) servant respectivement de première et de deuxième entrée d'un réseau de neurones (24) dont le nombre de neurones de la couche d'entrée est fonction du nombre de capteurs utilisés, le réseau de neurones (24) délivrant en sortie un signal estimé ($dX'_{estimé}$) permettant la correction des déplacements du robot (3 ; 9).

5. Robot (3; 9) évoluant dans l'espace à trois dimensions par asservissement de la perception de son environnement à une perception d'une position de référence (8) déterminée, comportant au moins un capteur (4; 18) couplé à des moyens de traitement des informations reçues par le capteur (4 ; 18) convertissant une variation de la perception du robot (3; 9) en une commande cartésienne ou articulaire déterminée, et des moyens mécaniques permettant de déplacer le robot (3; 9) en fonction de cette commande, caractérisé en ce qu'il comporte en outre au moins un réseau de neurones (14) recevant en entrée un nombre déterminé d'exemples issus des moyens de traitements des informations et estimant la loi de transformation entre les signaux perçus par le capteur (4; 18) et les mouvements à effectuer par le robot (3; 9), chaque exemple correspondant à la variation de la perception du robot (3; 9) liée à un déplacement déterminée du robot (3; 9) dans l'espace lors de l'apprentissage du réseau (14), et comporte en outre dans une boucle fermée des moyens de calculs recevant sur leur entrée une estimation de la position relative du robot (3; 9) par rapport à la position de référence à atteindre, l'estimation étant calculée par le réseau de neurones (14), et délivrant en sortie un signal de commande permettant au robot (3; 9) de corriger sa position courante pour la rapprocher de la position de référence (8) à atteindre, en ce qu'il comporte au moins un capteur (4; 18) d'image lui permettant de visualiser son environnement sous la forme d'une séquence d'images, et en ce qu'il comporte des moyens de traitement d'image calculant des descripteurs globaux d'image .

6. Robot (3; 9) selon la revendication 5, caractérisé en ce que les descripteurs globaux d'image sont des descripteurs de Fourier.

7. Robot (3; 9) selon la revendication 5, caractérisé en ce que les descripteurs globaux d'image sont des moments géométriques.

8. Robot (3; 9) selon l'une quelconque des revendications 5 à 7, caractérisé en ce qu'il comporte au moins deux capteurs permettant de lui conférer une perception tridimensionnelle de son environnement.

FIG.1

FIG.2

FIG.3

FIG. 4

FIG.5

FIG.6

FIG.7

FIG.8

EP 0 667 215 A1

EP 0 667 215 A1

Office européen
des brevets

**RAPPORT DE RECHERCHE EUROPEENNE**

Numero de la demande
EP 95 40 0146

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | IEEE TRANSACTIONS ON INDUSTRIAL ELECTRONICS AND CONTROL INSTRUMENTATION, vol. 39,no. 6, Décembre 1992 NEW YORK US, pages 490-496, XP 000323856 HIDEKI HASHIMOTO ET AL. 'Visual Control of Robotic Manipulator based on Neural Networks' * page 490 - page 496 * | 1,5 | B25J9/16 |
| Y | --- | 2-4,6-8 | |
| Y | REVUE TECHNIQUE THOMSON-CSF, vol. 25,no. 1, Mars 1993 ISSN 0035-4279 , FRANCE, pages 107-125, HENOCQ H ET AL 'D objects recognition by Fourier analysis of the silhouette' * page 107 - page 125 * | 2,3,6,7 | |
| A | --- | 1,4 | |
| Y | ROBOTICS AND AUTONOMOUS SYSTEMS, vol. 11,no. 3/4, Décembre 1993 AMSTERDAM NL, pages 243-260, XP 000414331 J.R. COOPERSTOCK & E.E. MILIOS 'Self-supervised Learning for Docking and Target Reaching' * page 243 - page 260 * --- -/-- | 4,8 | **DOMAINES TECHNIQUES RECHERCHES (Int.Cl.6)** <br> B25J |

Le présent rapport a été établi pour toutes les revendications

| Lieu de la recherche | Date d'achèvement de la recherche | Examinateur |
|---|---|---|
| LA HAYE | 23 Mai 1995 | Hauser, L |

| | Office européen des brevets | RAPPORT DE RECHERCHE EUROPEENNE | Numero de la demande EP 95 40 0146 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | SIXTH ITALIAN WORKSHOP. NEURAL NETS WIRN VIETRI-93, PROCEEDINGS OF SIXTH ITALIAN WORKSHOP NEURAL NETS WIRN VIETRI - 93, SALERNO, ITALY, 12-14 MAY 1993, ISBN 981-02-1700-5, 1994, SINGAPORE, WORLD SCIENTIFIC, SINGAPORE, pages 307-314, CAVALIERI S ET AL 'Neural solutions to the development of a robot for orange picking' * page 307 - page 314 * --- | 1,5 | |
| A | US-A-4 884 216 (KUPERSTEIN M.) * le document en entier * --- | 1,5,8 | |
| A | BIOLOGICAL CYBERNETICS, vol. 66,no. 1, Novembre 1991 , BERLIN, DE, pages 27-36, XP 000262387 P. DEAN ET AL. 'Saccade Control in a Simulated Robot Camera-Head System : Neural Net Architectures for Efficient Learning of Inverse Kinematics' * page 27 - page 36 * ----- | 1,5 | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| LA HAYE | 23 Mai 1995 | Hauser, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)